(19) Europäisches Patentamt

European Patent Office

Office européen des brevets

(11) **EP 1 381 485 B1**

(12) **EUROPÄISCHE PATENTSCHRIFT**

(45) Veröffentlichungstag und Bekanntmachung des Hinweises auf die Patenterteilung:
**30.03.2005  Patentblatt 2005/13**

(21) Anmeldenummer: 02740528.1

(22) Anmeldetag: **26.04.2002**

(51) Int Cl.⁷: **B22F 9/08**

(86) Internationale Anmeldenummer:
**PCT/EP2002/004652**

(87) Internationale Veröffentlichungsnummer:
**WO 2002/087810 (07.11.2002 Gazette 2002/45)**

(54) **VERFAHREN UND VORRICHTUNG ZUR HERSTELLUNG VON KUGELFÖRMIGEN METALLTEILCHEN**

METHOD AND DEVICE FOR PRODUCING SPHERICAL METAL PARTICLES

PROCEDE ET DISPOSITIF DE PRODUCTION DE PARTICULES METALLIQUES SPHERIQUES

(84) Benannte Vertragsstaaten:
**AT BE CH CY DE DK ES FI FR GB GR IE IT LI LU MC NL PT SE TR**

(30) Priorität: **26.04.2001  DE 10120612**

(43) Veröffentlichungstag der Anmeldung:
**21.01.2004  Patentblatt 2004/04**

(73) Patentinhaber: **Umicore AG & Co. KG**
**63403 Hanau (DE)**

(72) Erfinder:
• **KEMPF, Bernd**
  **63839 Kleinwallstadt (DE)**
• **PTASCHEK, Georg**
  **63694 Limeshain (DE)**
• **RINGELSTEIN, Hans-Martin**
  **60385 Frankfurt am Main (DE)**
• **FUCHS, Roland**
  **63826 Geiselbach (DE)**
• **DI VICENZO, Calogero**
  **63454 Hanau-Mittelbuchen (DE)**

(74) Vertreter: **VOSSIUS & PARTNER**
**Siebertstrasse 4**
**81675 München (DE)**

(56) Entgegenhaltungen:
**WO-A-00/51746          DE-A- 4 012 197**
**US-A- 3 729 278**

EP 1 381 485 B1

**Beschreibung**

Die Erfindung betrifft ein Verfahren und eine Vorrichtung zur Herstellung von kugelförmigen Metallteilchen.

Derartige kugelförmige Metallteilchen sind insbesondere als Lotkugeln ausgebildet, welche zur elektrischen Kontaktierung von elektronischen Bauelementen eingesetzt werden. Ein typischer Einsatzbereich ist dabei die Kontaktierung von integrierten Schaltkreisen auf Leiterplatten. Hierzu werden insbesondere Weichlotlegierungskugeln eingesetzt, deren Durchmesser typischerweise im Bereich zwischen 0,1 bis 1,5 mm liegen. Entscheidend für eine reproduzierbare und fehlerfreie Kontaktierung ist, dass die Lotkugeln eine möglichst ideale Kugelform aufweisen. Zudem muss die Größenschwankung der verwendeten Lotkugeln möglichst gering sein.

Aus der EP 0 467 221 B1 ist ein Verfahren und eine Vorrichtung zur Herstellung von kugelförmigen Teilchen aus einer flüssigen Phase bekannt. Die herzustellenden Teilchen bestehen insbesondere aus Metall oder Glas.

Aus der flüssigen Phase werden Tropfen erzeugt. Hierzu wird die flüssige Phase einer vibrierenden Düse zugeführt.

Die Düse selbst sowie eine definierte, an die Austrittsöffnung anschließende Strecke wird auf einer konstanten Temperatur gehalten, die 1°C bis 10°C oberhalb der Schmelztemperatur der flüssigen Phase liegt.

Die an der Austrittsöffnung austretenden Tropfen weisen noch keine Kugelform auf. Diese Kugelform der Tropfen bildet sich erst bei Durchlauf entlang der Strecke. Die Strecke ist dabei vertikal angeordnet, so dass aufgrund der Schwerkraft die Tropfen entlang der Strecke eine Fallbewegung ausführen, während derer sich die Kugelformen der Tropfen bilden.

Nach Durchlaufen dieser Strecke werden die kugelförmigen Tropfen in ein gasförmiges oder flüssiges Kühlmedium geleitet, dessen Arbeitstemperatur mindestens 100°C unterhalb der Schmelztemperatur liegt. Die Zufuhr des Kühlmediums erfolgt dabei vorzugsweise im Gleichstrom mit der Fallrichtung der Tropfen. Durch den Kontakt mit dem Kühlmedium werden die Tropfen schlagartig abgeschreckt, wodurch eine Verfestigung der Tropfen zu den jeweiligen Teilchen erfolgt.

Ein wesentlicher Nachteil dieses Verfahrens besteht darin, dass bei Auftreffen der Tropfen auf die Oberfläche des Kühlmediums Verformungen der Tropfen auftreten, die zu Abweichungen der Teilchen von der angestrebten Kugelform führen.

Weiterhin ist nachteilig, dass die Strecke zwischen Austrittsöffnung der Düse und Oberfläche des Kühlmediums nicht oder nur unvollständig gegen die Umgebungsatmosphäre abschirmbar ist. Bei der Herstellung von Metallteilchen unter Verwendung oxidierbarer Metallschmelzen kommt es dann zu einem teilweisen, nicht kontrollierten Verschluss der Austrittsöffnung der Düse. Dies wiederum führt zu unerwünschten Schwankungen der Größenverteilungen der Metallteilchen.

Die DE 40 12 197 C2 beschreibt ein Verfahren zur Herstellung von kugelförmigen Metallteilchen aus einer Schmelze. Die Schmelze wird aus einem Schmelztiegel tropfenweise in einen Flüssigkeitsstrom eingeleitet, welcher ein Kühlmedium zur Abkühlung der Tropfen bildet. Als Kühlmedium wird vorzugsweise ein Öl verwendet. Der Flüssigkeitsstrom wird dabei entgegen der Fallrichtung der Tropfen geleitet. Innerhalb des Flüssigkeitsstromes wird ein Temperaturgradient erzeugt, so dass im Bereich der Austrittsöffnung die Temperatur der Flüssigkeit mindestens so hoch wie die Schmelztemperatur des Metalls ist. Damit ist im Bereich des Flüssigkeitszulaufes die Temperatur der Flüssigkeit so gering, dass die im Flüssigkeitsstrom fallenden Tropfen wenigstens an ihren Oberflächen erstarren.

Nachteilig hierbei ist, dass die Flüssigkeit auf Temperaturen, welche der Schmelztemperatur des Metalls entsprechen, erhitzt werden müssen, was zu einer starken Belastung des Kühlmediums führt. Dies führt zu einer unerwünscht starken Beeinträchtigung der Verfügbarkeit derartiger Anlagen, da das Kühlmittel innerhalb kurzer Zeitintervalle erneuert werden muss. Weiterhin besteht die Gefahr einer Bildung von Crackprodukten im Bereich der Austrittsöffnung der Düse. Dadurch wird der Durchfluss der Flüssigkeit durch die Düse beeinflusst, wodurch unerwünscht hohe Schwankungen der Größen der Metallkugeln erhalten werden.

Der Erfindung liegt die Aufgabe zugrunde ein Verfahren und eine Vorrichtung der eingangs genannten Art zu schaffen, welche eine Herstellung von Metallteilchen mit möglichst perfekter Kugelform und konstanter Größe ermöglicht.

Zur Lösung dieser Aufgabe sind die Merkmale der Ansprüche 1 und 14 vorgesehen. Vorteilhafte Ausführungsformen und zweckmäßige Weiterbildungen sind in den Unteransprüchen beschrieben.

Bei dem erfindungsgemäßen Verfahren handelt es sich um die Herstellung von kugelförmigen Metallteilchen aus einer Schmelze. Zur Erzeugung von Tropfen wird ein Schmelzstrahl Vibrationen ausgesetzt und über wenigstens eine Düse geführt. Die entsprechende erfindungsgemäße Vorrichtung weist hierzu geeignete Mittel zur Erzeugung der Vibrationen auf. Zur Erzeugung der kugelförmigen Metallteilchen werden die Tropfen am Ausgang der Düse zur Verfestigung einem Kühlmedium zugeführt. Die Düse taucht dabei in das Kühlmedium ein, wobei die Temperatur des Kühlmediums unterhalb der Schmelztemperatur der Schmelze liegt.

Ein wesentlicher Vorteil der Erfindung besteht darin, dass die Düse in das vorzugsweise flüssige Kühlmedium eintaucht, so dass die Tropfen an der Austrittsöffnung unmittelbar in das Kühlmedium eingeleitet werden. Damit können in der Austrittsöffnung der Düse keine Querschnittsverkleinerungen der Austrittsöffnung der Düse durch Oxidationseffekte auftreten. Die bei Durchtritt durch die Düse gebildeten Tropfen weisen somit eine konstante und reproduzierbare Größe auf. Da die Tropfen unmittelbar nach Austritt aus der Düse in das Kühlmedium eingeleitet werden, treten keine Verformungen der Tropfen auf, welche bei einem Aufprall von Tropfen auf eine Kühlmitteloberfläche entstehen würden.

Weiterhin ist vorteilhaft, dass die Temperatur des Kühlmediums insbesondere auch im Bereich der Austrittsöffnung der Düse signifikant unterhalb der Schmelztemperatur der Schmelze liegt.

Die thermische Beanspruchung des Kühlmediums ist demzufolge entsprechend gering. Typischerweise liegt die Temperatur des Kühlmediums im Bereich der Austrittsöffnung der Düse mindestens 10°C, höchstens jedoch 100°C unterhalb der Schmelztemperatur. Besonders bevorzugt liegt die Kühlmitteltemperatur in einem Bereich von 20°C bis 70°C unterhalb der Schmelztemperatur.

In einer vorteilhaften Ausführungsform der Erfindung nimmt die Temperatur des Kühlmediums mit zunehmender Distanz zur Austrittsöffnung kontinuierlich ab. Bei Durchlauf eines Tropfens durch das Kühlmedium wird dieser bei fortlaufend geringeren Temperaturen kontinuierlich verfestigt. Dabei ist wesentlich, dass die Erstarrung eines Tropfens nicht schlagartig bei Austritt aus der Düse erfolgt. Dieser Effekt wird dadurch unterstützt, dass aufgrund eines Unterkühlungseffekts der Tropfen und der bei deren Erstarrung freiwerdenden Erstarrungsenthalpie die Verfestigung der Tropfen zu den Metallkugeln erst nach einer gewissen Verzögerungszeit erfolgt.

Dadurch werden die Tropfen bei Durchgang durch das Kühlmedium zuerst zu perfekten Kugeln ausgebildet, bevor sie zu den kugelförmigen Metallteilchen erstarren.

Vorteilhaft hierbei ist insbesondere, dass das vorzugsweise flüssige Kühlmedium nicht bewegt werden muss.

Mit dem erfindungsgemäßen Verfahren sind kugelförmige Metallteilchen, insbesondere Lotkugeln herstellbar, deren Formen perfekt kugelförmig ausgebildet sind und deren Größen nur äußerst geringen Schwankungen unterworfen sind. Zudem weisen die Lotkugeln metallisch glänzende, glatte Oberflächen auf.

Mit der erfindungsgemäßen Vorrichtung sind kugelförmige Metallteilchen, insbesondere Lotkugeln in Größen von typischerweise 0,1 mm bis 1,5 mm Durchmesser herstellbar. Die so hergestellten Lotkugeln sind vorteilhaft als sogenannte ball grid arrays zur elektrischen Kontaktierung von integrierten Schaltkreisen verwendbar.

Die Erfindung wird im nachstehenden anhand der Zeichnung erläutert. Es zeigt:

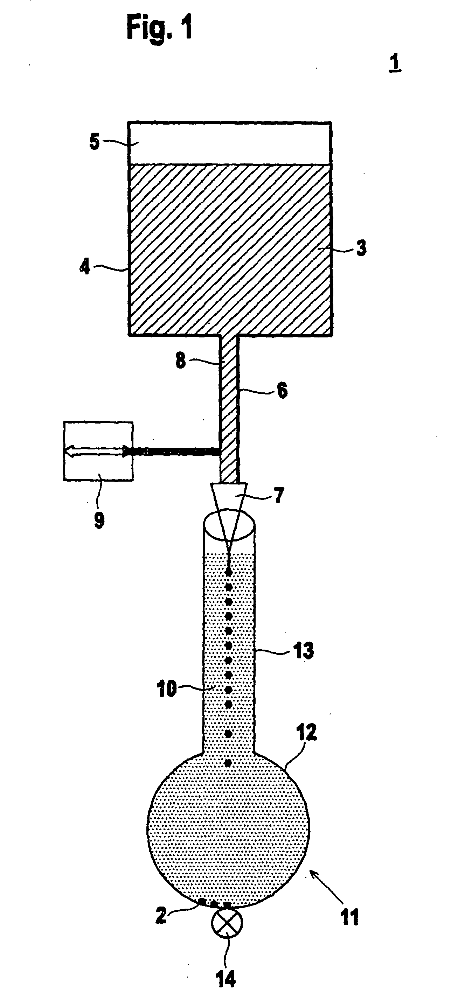

Figur 1: Schematische Darstellung eines Ausführungsbeispiels der erfindungemäßen Vorrichtung.

Figur 1 zeigt ein Ausführungsbeispiel der erfindungsgemäßen Vorrichtung 1 zur Herstellung von kugelförmigen Metallteilchen 2 aus einer Schmelze 3.

Die metallische Schmelze 3 befindet sich in einem Behälter 4, in dessen Innenraum eine Schutzgasatmosphäre 5 mit regelbarem Druck herrscht. Das die Schmelze 3 bildende Metall im Behälter 4 ist mittels einer nicht dargestellten Heizvorrichtung auf eine Temperatur oberhalb der Schmelztemperatur des Metalls erhitzt. Die Wände des Behälters 4 sind gasdicht ausgebildet.

An der Unterseite des Behälters 4 mündet ein rohrförmiger Schmelzenauslauf 6 aus, der zu einer Düse 7 geführt ist. Über den Schmelzenauslauf 6 wird ein Schmelzstrahl 8 aus dem Behälter 4 der Düse 7 zugeführt.

Im vorliegenden Ausführungsbeispiel mündet der Schmelzenauslauf 6 am Boden des Behälters 4 in vertikaler Richtung verlaufend aus, so dass durch die Schwerkraft der Schmelzstrahl 8 der Düse 7 zugeführt ist.

Alternativ kann der Schmelzenauslauf 6 auch nach oben zur Düse 7 geführt sein, so dass der Schmelzstrahl 8 nur durch Druckeinwirkung auf die Düse 7 geführt ist. Hierzu kann eine Druckvorrichtung, insbesondere eine Gasdruckvorrichtung vorgesehen sein. Der Vorteil dieser Anordnung besteht darin, dass die Schmelze 3 der Düse 7 über den erzeugten Druck geregelt zugeführt werden kann. Insbesondere ist dann gewährleistet, dass bei fehlendem Druck keine Schmelze 3 über die Düse 7 austritt.

Prinzipiell kann eine Druckvorrichtung auch bei der Vorrichtung 1 gemäß Figur 1 vorgesehen sein, um dort die Schmelze 3 mit Druck auf die Düse 7 zu führen.

Im vorliegenden Ausführungsbeispiel ist eine einzelne Düse 7 vorgesehen. Prinzipiell können auch Mehrfachanordnungen von Düsen 7 vorgesehen sein.

Die Düse 7 und der Schmelzenauslauf 6 sind ebenfalls beheizt, wobei hierzu vorzugsweise ein separates, ebenfalls nicht dargestelltes Heizelement vorgesehen ist.

Damit die Schmelze 3 an der Austrittsöffnung der Düse 7 in Form von Tropfen definierter und konstanter Größe austreten kann, sind Mittel zur Erzeugung von Vibrationen in der Schmelze 3 vorgesehen. Prinzipiell können diese Mittel von einer schwingenden Platte gebildet sein, welche in die Schmelze 3 im Innern des Behälters 4 eingebracht wird.

Im vorliegenden Fall sind diese Mittel von einem Schwingungselement 9 gebildet, welches direkt oder über den Schmelzenauslauf 6 an die Düse 7 angekoppelt ist, um diese in Schwingungen zu versetzen. Das Schwingungselement 9 kann von einem piezoelektrischen Element oder einem elektromagnetischen Schwingungselement 9 gebildet sein.

Die Austrittsöffnung der Düse 7 taucht in ein flüssiges Kühlmedium 10 ein, welches in einem Sammelbehälter 11 ruhend gelagert ist. Der Sammelbehälter 11 weist einen Grundkörper 12 auf, an dessen Oberseite eine hohlzylindrische Säule 13 ausmündet. Die in vertikaler Richtung verlaufende Säule 13 ist an ihrer Oberseite offen, wobei die Düse 7 über die offene Oberseite in das Innere der Säule 13 ragt.

Dem Sammelbehälter 11 ist eine weitere Heizvorrichtung zugeordnet. Zweckmäßigerweise wird der Sammelbehälter 11 derart beheizt, dass die Temperatur des Kühlmediums 10 in der Säule 13 von deren Oberseite zu ihrem unteren Ende hin kontinuierlich abnimmt. Prinzipiell kann auch ein räumlich veränderliches oder ein konstantes Temperaturprofil des Kühlmediums 10 im Sammelbehälter 11 gewählt werden. In jedem Fall ist gewährleistet, dass die Temperatur des Kühlmediums 10 an keiner Stelle des Sammelbehälters 11 die Schmelztemperatur der Schmelze 3 erreicht.

Die über die Düse 7 austretenden Tropfen erstarren bei Passieren des Kühlmediums 10 und werden am Boden des Sammelbehälters 11 als kugelförmige Metallteilchen 2 abgelagert. Im Bereich des Bodens des Sammelbehälters 11 befindet sich eine Ablassvorrichtung 14 über welche die kugelförmigen Metallteilchen 2 aus dem Sammelbehälter 11 entnommen werden können.

Um einen kontinuierlich ablaufenden Herstellungsprozess zu erhalten, sind vorzugsweise Mittel zur kontinuierlichen Zufuhr der Schmelze 3 in den Behälter 4 vorgesehen. Beispielsweise können diese Mittel einen Nachfüllbehälter oder dergleichen umfassen.

Zweckmäßigerweise ist die gesamte Vorrichtung 1 vakuumdicht gekapselt um in deren Innenraum eine definierte Schutzgasatmosphäre 5 zu erhalten.

Die Schmelze 3 in dem Behälter 4 besteht aus Metall bzw. metallischen Legierungen zur Herstellung von Lotkugeln, wobei deren Schmelztemperatur vorzugsweise unterhalb von 500°C liegt.

Die Temperatur des Schmelzstrahls 8 im Bereich des Schmelzenauslaufs 6 und im Bereich der Düse 7 wird auf einer konstanten Temperatur oberhalb der Schmelztemperatur der Schmelze 3 gehalten, wobei die Temperatur wenigstens 10°C oberhalb der Schmelztemperatur liegt.

Die Temperatur des Kühlmediums 10 im Bereich der Düse 7 liegt dagegen wenigstens 10°C, höchstens jedoch 100°C unterhalb der Schmelztemperatur der Schmelze 3. Besonders bevorzugt liegt die Temperatur des Kühlmediums 10 in einem Bereich von 20°C bis 70°C unterhalb der Schmelztemperatur.

Die Art des verwendeten Kühlmediums 10 hängt von der Art der Schmelze 3 und insbesondere von deren Schmelztemperatur ab.

Für hochschmelzende Metalllegierungen wie zum Beispiel Pb-Basis-Lote mit Schmelztemperaturen im Bereich von etwa 300°C werden als Kühlmedium 10 bevorzugt Silikonöle wie zum Beispiel Silikonöl AP 150 eingesetzt.

Für Metalllegierungen, deren Schmelztemperaturen dicht unterhalb von 300°C liegen, wie zum Beispiel Pb-Basis-Lote, Sn-Basis-Lote oder Pb-Sn-Lote werden beispielsweise Mineralöle eingesetzt. Weiterhin sind synthetische Kühlmedien einsetzbar, insbesondere Wärmeträgerflüssigkeiten wie zum Beispiel Marlotherm auf der Basis von Benzyltoluol (Fa. Hüls), Quenchant (Fa. Houden) oder Mediatherm (Fa. Hoechst). Auch flüssige Polyethylenglykole oder Paraffinöle sind als Kühlmedien einsetzbar.

Für Metall-Legierungen, deren Schmelztemperaturen weit unterhalb von 300°C liegen, wie zum Beispiel eutektische Sn-Pb-Lote mit Zusätzen wie Indium und Wismut, sind insbesondere biologisch abbaubare Öle einsetzbar, welche aus nachwachsenden Rohstoffen gewonnen werden, Beispiele hierfür sind Sojaöl, Palmöl, Rizinusöl, Kokosöl, Sonnenblumenöl, Rapsöl, Olivenöl, Leinöl sowie Nussöle wie zum Beispiel Erdnussöl oder Kürbiskernöl.

Zur Erzeugung von kugelförmigen Metallteilchen 2 aus der im Behälter 4 gelagerten Schmelze 3 wird der Schmelzstrahl 8 im Schmelzenauslauf 6 und insbesondere im Bereich der Düse 7 in Schwingung versetzt.

Gemäß dem von Lord Raleigh beschriebenen Prinzip (Proc. Lond. Math. Soc. 10, 4 (1878) werden durch die Schwingungen im Schmelzstrahl 8 Einschnürungen erzeugt. Durch diese Einschnürungen wird der ursprünglich homogene Schmelzstrahl 8 in definierte Zylinderabschnitte unterteilt. Bei geeigneter Dimensionierung der Zylinderabschnitte bilden sich aus diesen bei Austritt aus der Düse 7 Tropfen, die bei Einleitung und Führung im Kühlmedium 10 eine kugelförmige Gestalt aufweisen.

Um die gewünschten Einschnürungen im Schmelzstrahl 8 zu erzeugen muss die Wellenlänge der induzierten Schwingungen größer als der Durchmesser des Schmelzstrahls 8 sein. Es hat sich gezeigt, dass die optimale Wellenlänge der Schwingungen etwa beim 4,5-fachen Wert des Durchmessers des Schmelzstrahls 8 liegt.

Der zur Erzeugung von metallischen Kugeln mit einem Durchmesser d optimale Durchmesser D des Schmelzstrahls 8 berechnet sich aus der Bedingung, dass das Volumen eines durch die schwingungsinduzierten Einschnürungen in dem Schmelzstrahl 8 abgetrennten Zylindersegmente dem Volumen dieser Kugel entspricht.

Dabei entspricht der Durchmesser D dieses Zylindersegments dem Durchmesser des Schmelzstrahls 8. Die Länge L des Zylindersegments entspricht der schwingungsinduzierten Zerfallslänge L, welche dem 4,5-fachen Wert des Durchmessers D entspricht.

Somit ergibt sich für die Erzeugung von metallischen Kugeln mit einem Durchmesser d als optimaler Wert für den Durchmesser D des Schmelzstrahls 8

$$D = d/1{,}89.$$

Um eine derartige gleichförmige Unterteilung des Schmelzstrahls 8 in Abschnitte mit einer konstanten Zerfallslänge L zu erzeugen, werden vorzugsweise Schwingungen mit konstanter Frequenz und Amplitude verwendet. Dabei können die Schwingungen transversal und/oder longitudinal bezüglich der Strömungsrichtung des Schmelzstrahls 8 ausgebildet sein.

Die Zerfallslängen L sind im Wesentlichen durch die Abstände der Schwingungsknoten im Schmelzstrahl 8 vorgegeben. Diese Abstände sind im Wesentlichen durch die Beziehung

$$L = v \cdot T/2$$

vorgegeben, wobei v die Strömungsgeschwindigkeit des Schmelzstrahls 8 und T die Periodendauer der Schwingung ist.

Durch die schwingungsinduzierte Einschnürung werden Tropfen vorgegebener Größe an der Austrittsöffnung der Düse 7 erhalten. Der Durchmesser der Tropfen hängt dabei vom Durchmesser der Düse 7, der Strahlaustrittsgeschwindigkeit an der Düse 7 sowie von den Schwingungsparametern, insbesondere der Schwingungsfrequenz ab. Diese Parameter definieren ein Prozessfenster, innerhalb dessen Tropfen vorgegebener und konstanter Größe reproduzierbar herstellbar sind.

Bei Ausleitung der Tropfen tauchen diese unmittelbar in das Kühlmedium 10 ein, dessen Temperatur unterhalb der Schmelztemperatur liegt. Trotz der plötzlich einwirkenden Abkühlung erstarren die Tropfen nicht sofort an der Austrittsöffnung der Düse 7 sondern bewegen sich noch in flüssigem Zustand innerhalb des Kühlmediums 10, wodurch sich eine perfekte Kugelform der Tropfen ausbilden kann.

Die Geschwindigkeit des Erstarrungsprozesses der Tropfen ist durch die Temperatur des Kühlmediums 10, insbesondere der Temperaturgradienten in Längsrichtung der Säule 13 vorgebbar. In jedem Fall sind der Sammelbehälter 11 und insbesondere die Höhe der Säule 13 sowie die Temperatur des Kühlmediums 10 derart dimensioniert, dass die Tropfen erstarrt sind, bevor sie den Boden des Sammelbehälters 11 erreichen. Dadurch werden unerwünschte Verformungen der kugelförmigen Metallteilchen 2 vermieden.

Anhand der folgenden Beispiele wird die Erfindung näher erläutert:

Beispiel 1:

Zur Herstellung von kugelförmigen Metallteilchen 2 mit 0,76 mm Durchmesser aus der eutektischen Legierung SnPb37 wird die metallische Schmelze 3 über eine Düse 7 in Form einer Keramikdüse mit einem Durchmesser von 0,4 mm in ein pflanzliches Öl (Rizinus) eingeleitet, welches das Kühlmedium 10 bildet. Der Düsenaustritt sitzt 1 mm unterhalb der Oberfläche des Kühlmediums 10. die maximale Temperatur des Öls liegt dabei an der Oberfläche bei 130°C und nimmt nach unten ab. Die Düse 7 ist mit einer Schwingungsfrequenz von 500 Hz beaufschlagt. Die resultierenden kugelförmigen Metallteilchen 2 sind perfekt in der Kugelgestalt und besitzen eine metallisch glänzende Oberfläche.

Beispiel 2:

Zur Herstellung von kugelförmigen Metallteilchen 2 mit Durchmessern von 0,5 mm aus der hochschmelzenden Pb-Basislegierung Pb95Sn5 mit einem Schmelzbereich von 305 - 315°C wird die auf 360°C aufgeheizte Schmelze 3 in ein von Silikonöl gebildetes Kühlmedium 10 mit einer Temperatur von 280°C geleitet. Innerhalb der ersten 30 cm der Ölsäule innerhalb der Säule 13 des Sammelbehälters 11 fällt die Temperatur auf unter 200°C ab. Die Düse 7 besteht aus einem nichtrostenden Edelstahl. Die Austrittsöffnung weist einen Durchmesser von 0,29 mm auf und schwingt mit einer Frequenz von 800 Hz. Die derart erzeugten kugelförmigen Metallteilchen 2 besitzen eine enge Größenverteilung. 85 % der Kugeln weichen nicht mehr als ± 15 μm von dem Solldurchmesser von 500 μm ab.

**Verfahren und Vorrichtung zur Herstellung von kugelförmigen Metallteilchen**

**Bezugszeichenliste**

1. Vorrichtung
2. Metallteilchen
3. Schmelze
4. Behälter
5. Schutzgasatmosphäre
6. Schmelzenauslauf
7. Düse
8. Schmelzstrahl
9. Schwingungselement
10. Kühlmedium
11. Sammelbehälter
12. Grundkörper
13. Säule
14. Ablassvorrichtung

**Patentansprüche**

**1.** Verfahren zur Herstellung von kugelförmigen Metallteilchen aus einer Schmelze, wobei zur Erzeugung von Tropfen ein Schmelzstrahl Vibrationen ausgesetzt und über wenigstens eine Düse geführt wird, und wobei zur Erzeugung der kugelförmigen Metallteilchen die Tropfen am Ausgang der Düse zur Verfestigung einem Kühlmedium zugeführt werden,
**dadurch gekennzeichnet,**
**dass** die Düse (7) in das Kühlmedium (10) eintaucht, und dass die Temperatur des Kühlmediums (10) unterhalb der Schmelztemperatur der Schmelze (3) liegt.

2. Verfahren nach Anspruch 1,
**dadurch gekennzeichnet,**
**dass** die Düse (7) in ein ruhendes, vorzugsweise flüssiges Kühlmedium (10) eingetaucht wird.

3. Verfahren nach einem der Ansprüche 1 oder 2,
**dadurch gekennzeichnet,**
**dass** die Temperatur des Kühlmediums (10) mit zunehmender Distanz zur Austrittsöffnung der Düse (7) kontinuierlich abnimmt.

4. Verfahren nach einem der Ansprüche 2 oder 3,
**dadurch gekennzeichnet,**
**dass** die Temperatur des Kühlmediums (10) im Bereich der Austrittsöffnung der Düse (7) mindestens 10°C unterhalb der Schmelztemperatur der Schmelze (3) liegt.

5. Verfahren nach Anspruch 4,
**dadurch gekennzeichnet,**
**dass** die Temperatur des Kühlmediums (10) im Bereich der Austrittsöffnung der Düse (7) höchstens 100°C unterhalb der Schmelztemperatur der Schmelze (3) liegt.

6. Verfahren nach einem der Ansprüche 4 oder 5,
**dadurch gekennzeichnet,**
**dass** die Temperatur des Kühlmediums (10) im Bereich der Austrittsöffnung der Düse (7) in einem Bereich von 20°C bis 70°C unterhalb der Schmelztemperatur der Schmelze (3) liegt.

7. Verfahren nach einem der Ansprüche 1 - 6,
**dadurch gekennzeichnet,**
**dass** die Temperatur des Schmelzstrahls (8) im Bereich der Düse (7) und des Schmelzenauslaüfs (6) wenigstens 10°C oberhalb der Schmelztemperatur liegt.

8. Verfahren nach einem der Ansprüche 1 - 7,
**dadurch gekennzeichnet,**
**dass** der Schmelzpunkt der Metallteilchen (2) unterhalb von 500°C liegt.

9. Verfahren nach Anspruch 8,
**dadurch gekennzeichnet,**
**dass** die Metallteilchen (2) als Lot-Kugeln ausgebildet sind.

10. Verfahren nach einem der Ansprüche 8 oder 9,
**dadurch gekennzeichnet,**
**dass** bei Schmelztemperaturen von wenigstens 300°C als Kühlmedium (10) Silikonöle verwendet werden.

11. Verfahren nach einem der Ansprüche 8 oder 9,
**dadurch gekennzeichnet,**
**dass** bei Schmelztemperaturen dicht unterhalb von 300°C als Kühlmedium (10) Mineralöle, synthetische Kühlmedien, Polyethylenglykole oder Paraffinöle verwendet werden.

12. Verfahren nach einem der Ansprüche 8 oder 9,
**dadurch gekennzeichnet,**
**dass** bei Schmelztemperaturen weit unterhalb von 300°C als Kühlmedium (10) biologisch abbaubare Öle verwendet werden.

13. Verfahren nach einem der Ansprüche 1 - 12,
**dadurch gekennzeichnet,**
**dass** die auf den Schmelzstrahl (8) wirkenden Vibrationen eine konstante Frequenz und eine konstante Amplitude aufweisen.

14. Vorrichtung zur Durchführung des Verfahrens nach einem der Ansprüche 1 - 13,
mit Mitteln zur Erzeugung von Tröpfchen aus einer Schmelze, welche Mittel zur Erzeugung von Vibrationen innerhalb eines Schmelzstrahls und wenigstens eine Düse, über welche der Schmelzstrahl geführt ist, aufweisen, wobei zur Erzeugung kugelförmiger Metallteilchen die Tröpfchen am Ausgang der Düse einem Kühlmedium zugeführt sind,
**dadurch gekennzeichnet,**
**dass** das Kühlmedium (10) in einem Sammelbehälter (11) mit einer hohlzylindrischen Säule (13) angeordnet ist, wobei die Düse (7) über die offene Oberseite der Säule (13) in den Sammelbehälter (11) geführt ist,
**dass** die Düse (7) in das Kühlmedium (10) eingetaucht ist, und dass die Temperatur des Kühlmediums (10) unterhalb der Schmelztemperatur der Schmelze (3) liegt.

15. Vorrichtung nach Anspruch 14,
**dadurch gekennzeichnet,**
**dass** die Schmelze (3) in einem Behälter (4) angeordnet ist, in welchen als Mittel zur Erzeugung von Vibrationen eine schwingende Platte eingebracht ist.

16. Vorrichtung nach Anspruch 15,
**dadurch gekennzeichnet,**
**dass** an der Unterseite des Behälters (4) ein rohrförmiger Schmelzenauslauf (6) ausmündet, über welchen der Schmelzenstrahl der Düse (7) zugeführt ist.

17. Vorrichtung nach einem der Ansprüche 14 - 16,
**dadurch gekennzeichnet,**
**dass** an die Düse (7) und/oder den Schmelzenauslauf (6) ein Schwingungselement (9) gekoppelt ist, mittels dessen die Düse (7) in Schwingungen versetzt ist.

18. Vorrichtung nach Anspruch 17,
**dadurch gekennzeichnet,**
**dass** das Schwingungselement (9) von einem piezoelektrischen Element oder von einem elektromagnetischen Schwingungselement (9) gebildet ist.

19. Vorrichtung nach einem der Ansprüche 14 - 18,
**dadurch gekennzeichnet,**
**dass** der Durchmesser der Austrittsöffnung an die Größe der zu erzeugenden Metallteilchen (2) angepasst ist.

20. Vorrichtung nach einem der Ansprüche 14 - 19,
**dadurch gekennzeichnet,**
**dass** die Frequenz der Vibrationen in Abhängigkeit der Strömungsgeschwindigkeit des Schmelzstrahls (8) an die Größe der zu erzeugenden Metallteilchen (2) angepasst ist.

21. Vorrichtung nach einem der Ansprüche 14 - 20,
**dadurch gekennzeichnet,**
**dass** die Düse (7) und der Schmelzenauslauf (6) mittels eines Heizelements beheizbar sind.

22. Vorrichtung nach einem der Ansprüche 14 - 21,
**dadurch gekennzeichnet,**
**dass** diese eine Mehrfachanordnung von Düsen (7) aufweist.

23. Vorrichtung nach einem der Ansprüche 14 - 22,
**dadurch gekennzeichnet,**
**dass** diese eine Druckvorrichtung aufweist, mittels derer der Schmelzstrahl (8) in Richtung der oder jeder Düse (7) gepresst ist.

24. Vorrichtung nach einem der Ansprüche 14 - 23,
**dadurch gekennzeichnet,**
**dass** diese Mittel zur kontinuierlichen Zufuhr der Schmelze (3) aufweist.

25. Vorrichtung nach einem der Ansprüche 14 - 24,
**dadurch gekennzeichnet,**
**dass** die Temperatur des Kühlmediums (10) in der Säule (13) von der Oberseite zum unteren Ende der Säule (13) hin kontinuierlich abnimmt.

26. Vorrichtung nach einem der Ansprüche 14 - 25,
**dadurch gekennzeichnet,**

**dass** im Bereich des Bodens des Sammelbehälters (11) eine Ablassvorrichtung (14) zur Entnahme von Metallteilchen (2) aus dem Sammelbehälter (11) vorgesehen ist.

27. Vorrichtung nach einem der Ansprüche 14 - 26,
**dadurch gekennzeichnet,**
**dass** diese vakuumdicht gekapselt ist.

**Claims**

1. A process for producing spherical metallic particles from a melt, wherein with a view to generating drops a stream of melt is exposed to vibrations and is guided via at least one nozzle, and wherein with a view to generating the spherical metallic particles the drops are supplied at the exit of the nozzle to a cooling medium with a view to solidification,
**characterised in that**
the nozzle (7) is immersed in the cooling medium (10), and **in that** the temperature of the cooling medium (10) lies below the melting-temperature of the melt (3).

2. Process according to Claim 1,
**characterised in that**
the nozzle (7) is immersed in a static, preferably liquid cooling medium (10).

3. Process according to one of Claims 1 or 2,
**characterised in that**
the temperature of the cooling medium (10) decreases continuously with increasing distance from the exit opening of the nozzle (7).

4. Process according to one of Claims 2 or 3,
**characterised in that**
the temperature of the cooling medium (10) in the region of the exit opening of the nozzle (7) lies at least 10 °C below the melting-temperature of the melt (3).

5. Process according to Claim 4,
**characterised in that**
the temperature of the cooling medium (10) in the region of the exit opening of the nozzle (7) lies at most 100 °C below the melting-temperature of the melt (3).

6. Process according to one of Claims 4 or 5,
**characterised in that**
the temperature of the cooling medium (10) in the region of the exit opening of the nozzle (7) lies within a range from 20 °C to 70 °C below the melting-temperature of the melt (3).

7. Process according to one of Claims 1 - 6,

**characterised in that**
the temperature of the stream of melt (8) in the region of the nozzle (7) and of the melt outlet (6) lies at least 10 °C above the melting-temperature.

8. Process according to one of Claims 1 - 7,
**characterised in that**
the melting-point of the metallic particles (2) lies below 500 °C.

9. Process according to Claim 8,
**characterised in that**
the metallic particles (2) take the form of solder balls.

10. Process according to one of Claims 8 or 9,
**characterised in that**
at melting-temperatures of at least 300 °C use is made of silicone oils by way of cooling medium (10).

11. Process according to one of Claims 8 or 9,
**characterised in that**
at melting-temperatures just below 300 °C use is made of mineral oils, synthetic cooling media, polyethylene glycols or paraffin oils by way of cooling medium (10).

12. Process according to one of Claims 8 or 9,
**characterised in that**
at melting-temperatures far below 300 °C use is made of biodegradable oils by way of cooling medium (10).

13. Process according to one of Claims 1 - 12,
**characterised in that**
the vibrations acting on the stream of melt (8) have a constant frequency and a constant amplitude.

14. A device for implementing the process according to one of Claims 1 - 13,
with means for generating droplets from a melt, which means comprise means for generating vibrations within a stream of melt and at least one nozzle via which the stream of melt is guided, whereby with a view to generating spherical metallic particles the droplets are supplied at the exit of the nozzle to a cooling medium,
**characterised in that**
the cooling medium (10) is arranged in a collecting vessel (11) with a hollow cylindrical column (13), the nozzle (7) being guided into the collecting vessel (11) via the open upper side of the column (13), **in that** the nozzle (7) is immersed in the cooling medium (10), and **in that** the temperature of the cooling medium (10) lies below the melting-temperature of the melt (3).

15. Device according to Claim 14,
**characterised in that**
the melt (3) is arranged in a container (4) into which an oscillating plate has been introduced by way of means for generating vibrations.

16. Device according to Claim 15,
**characterised in that**
a tubular melt outlet (6), via which the stream of melt is supplied to the nozzle (7), discharges on the underside of the container (4).

17. Device according to one of Claims 14 - 16,
**characterised in that**
an oscillatory element (9), by means of which the nozzle (7) is caused to oscillate, is coupled to the nozzle (7) and/or to the melt outlet (6).

18. Device according to Claim 17,
**characterised in that**
the oscillatory element (9) is constituted by a piezoelectric element or by an electromagnetic oscillatory element (9).

19. Device according to one of Claims 14 - 18,
**characterised in that**
the diameter of the exit opening is adapted to the size of the metallic particles (2) to be generated.

20. Device according to one of Claims 14 - 19,
**characterised in that**
the frequency of the vibrations is adapted, as a function of the rate of flow of the stream of melt (8), to the size of the metallic particles (2) to be generated.

21. Device according to one of Claims 14 - 20,
**characterised in that**
the nozzle (7) and the melt outlet (6) are capable of being heated by means of a heating element.

22. Device according to one of Claims 14 - 21,
**characterised in that**
said device comprises a multiple arrangement of nozzles (7).

23. Device according to one of Claims 14 - 22,
**characterised in that**
said device comprises a compression apparatus, by means of which the stream of melt (8) is pressed in the direction of the or each nozzle (7).

24. Device according to one of Claims 14 - 23,
**characterised in that**
said device comprises means for continuous supply of the melt (3).

25. Device according to one of Claims 14 - 24,
**characterised in that**
the temperature of the cooling medium (10) in the column (13) decreases continuously from the upper side to the lower end of the column (13).

26. Device according to one of Claims 14 - 25, **characterised in that** in the region of the bottom of the collecting vessel (11) a discharge apparatus (14) is provided for withdrawal of metallic particles (2) from the collecting vessel (11).

27. Device according to one of Claims 14 - 26, **characterised in that** said device is encapsulated in vacuum-tight manner.

**Revendications**

1. Procédé de fabrication de particules métalliques sphéroïdales à partir d'une fonte, selon lequel, pour produire des gouttelettes, un jet de coulée est soumis à des vibrations et dirigé par au moins une buse, et pour produire les particules métalliques sphéroïdales, les gouttelettes sont dirigées dans un fluide de refroidissement à la sortie de la buse pour être durcies, **caractérisé en ce que** la buse (7) est immergée dans le fluide de refroidissement (10) et la température du fluide de refroidissement (10) est inférieure à la température de fusion de la fonte (3).

2. Procédé selon la revendication 1, **caractérisé en ce que** la buse (7) est plongée dans un fluide de refroidissement (10) non-agité, de préférence liquide.

3. Procédé selon l'une des revendications 1 ou 2, **caractérisé en ce que** la température du fluide de refroidissement (10) diminue en continu lorsque la distance par rapport à l'orifice de sortie de la buse (7) augmente.

4. Procédé selon l'une des revendications 2 ou 3, **caractérisé en ce que** au niveau de l'orifice de sortie de la buse (7), la température du fluide de refroidissement (10) est au moins de 10°C inférieure à la température de fusion de la fonte (3).

5. Procédé selon la revendication 4, **caractérisé en ce que** au niveau de l'orifice de sortie de la buse (7), la température du fluide de refroidissement (10) est au plus de 100°C inférieure à la température de fusion de la fonte (3).

6. Procédé selon l'une des revendications 4 ou 5,

**caractérisé en ce que** au niveau de l'orifice de sortie de la buse (7), la température du fluide de refroidissement (10) est comprise dans la plage allant de 20°C à 70°C en dessous de la température de fusion de la fonte (3).

7. Procédé selon l'une des revendications 1 à 6, **caractérisé en ce que** au niveau de la buse (7) et de l'orifice de fusion (6), la température du jet de coulée (8) est au moins de 10°C supérieure à la température de fusion.

8. Procédé selon l'une des revendications 1 à 7, **caractérisé en ce que** le point de fusion des particules métalliques (2) est inférieur à 500°C.

9. Procédé selon la revendication 8, **caractérisé en ce que** les particules métalliques (2) sont des billes de brasage.

10. Procédé selon l'une des revendications 8 ou 9, **caractérisé en ce que** pour des températures de fusion d'au moins 300°C, on utilise, comme fluide de refroidissement (10), des huiles de silicone.

11. Procédé selon l'une des revendications 8 ou 9, **caractérisé en ce que** pour des températures de fusion légèrement inférieures à 300°C, on utilise, comme fluide de refroidissement (10), des huiles minérales, des fluides de refroidissement synthétiques, des polyéthylène glycols ou des huiles de paraffine.

12. Procédé selon l'une des revendications 8 ou 9, **caractérisé en ce que** pour des températures de fusion largement inférieures à 300°C, on utilise, comme fluide de refroidissement (10), des huiles biologiquement dégradables.

13. Procédé selon l'une des revendications 1 à 12, **caractérisé en ce que** les vibrations agissant sur le jet de coulée (8) ont une fréquence constante et une amplitude constante.

14. Dispositif de réalisation du procédé selon l'une des revendications 1 à 13, comprenant des moyens de production de gouttelettes à partir d'une fonte, avec des moyens de production de vibrations à l'intérieur d'un jet de coulée et au moins une buse pour diriger le jet de coulée, et dans lequel, pour produire des particules métalliques sphéroïdales, les gouttelettes sont dirigées dans un fluide de refroidissement à la sortie de la buse,
**caractérisé en ce que**
le fluide de refroidissement (10) est disposé dans un réservoir (11) comprenant une colonne (13) cylindrique creuse, la buse (7) étant dirigée dans le réservoir (11) sur la face supérieure ouverte de la colonne (13),
la buse (7) est immergée dans le fluide de refroidissement (10) et la température du fluide de refroidissement (10) est inférieure à la température de fusion de la fonte (3).

15. Dispositif selon la revendication 14,
**caractérisé en ce que**
la fonte (3) est contenue dans un récipient (4), dans lequel on introduit une plaque vibrante comme moyen de production des vibrations.

16. Dispositif selon la revendication 15,
**caractérisé en ce que**
sur la face inférieure du récipient (4), débouche un orifice de fusion (6) tubulaire dans lequel est dirigé le jet de coulée de la buse (7).

17. Dispositif selon l'une des revendications 14 à 16,
**caractérisé en ce qu'**
un élément vibratoire (9) est couplé à la buse (7) et/ou à l'orifice de fusion (6), cet élément vibratoire permettant de déplacer la buse (7) par vibrations.

18. Dispositif selon la revendication 17,
**caractérisé en ce que**
l'élément vibratoire (9) est formé d'un élément piézo-électrique ou d'un élément vibratoire électromagnétique (9).

19. Dispositif selon l'une des revendications 14 à 18,
**caractérisé en ce que**
le diamètre de l'orifice de sortie est adapté à la grandeur des particules métalliques (2) à produire.

20. Dispositif selon l'une des revendications 14 à 19,
**caractérisé en ce que**
la fréquence des vibrations est adaptée à la grandeur des particules métalliques (2) à produire en fonction de la vitesse d'écoulement du jet de coulée (8).

21. Dispositif selon l'une des revendications 14 à 20,
**caractérisé en ce que**
la buse (7) et l'orifice de fusion (6) peuvent être chauffés au moyen d'un élément chauffant.

22. Dispositif selon l'une des revendications 14 à 21,
**caractérisé en ce que**
celui-ci présente un agencement multiple de buses (7).

23. Dispositif selon l'une des revendications 14 à 22,
**caractérisé en ce que**
celui-ci présente un dispositif sous pression qui permet de comprimer le jet de coulée (8) dans la direction de la ou de chaque buse (7).

24. Dispositif selon l'une des revendications 14 à 23,
**caractérisé en ce que**
celui-ci présente des moyens de direction en continu de la fonte (3).

25. Dispositif selon l'une des revendications 14 à 24,
**caractérisé en ce que**
la température du fluide de refroidissement (10) décroît en continu dans la colonne (13) de la face supérieure à l'extrémité inférieure de la colonne (13).

26. Dispositif selon l'une des revendications 14 à 25,
**caractérisé en ce qu'**
au fond du réservoir (11), un système de vidange (14) sert à prélever les particules métalliques (2) à partir du réservoir (11).

27. Dispositif selon l'une des revendications 14 à 26,
**caractérisé en ce que**
celui-ci est fermé sous vide de manière étanche.

# Fig. 1